# EUROPEAN PATENT SPECIFICATION

(11) **EP 3 231 608 B1**
(45) Date of publication and mention of the grant of the patent: **12.06.2019**
(21) Application number: 15867820.1
(22) Date of filing: 16.04.2015
(51) Int. Cl.: B32B 27/08, B32B 27/18, B32B 27/36, B32B 27/30, B32B 27/32, B32B 5/20, B32B 7/12, B32B 27/06, B32B 27/16, B32B 27/34

(54) **DEGRADABLE FOAMED AND CO-EXTRUDED PA BARRIER FILM**
ABBAUBARE GESCHÄUMTE UND KOEXTRUDIERTE PA-SPERRFOLIE
FILM BARRIÈRE DE PA CO-EXTRUDÉ ET EXPANSÉ DÉGRADABLE

(30) Priority: 11.12.2014 CN 201410753619
(43) Date of publication of application: 18.10.2017
(73) Proprietor: Jiapu Innovative Film (Kunshan) Co., Ltd., Kunshan comprehensive free trade zone (CN)
(72) Inventor: XIA, Jialiang, Suzhou Jiangsu 215321 (CN); GAO, Xuewen, Jiangsu 215021 (CN); XIA, Yu, Suzhou Jiangsu 215321 (CN); TANG, Minyan, Suzhou Jiangsu 215321 (CN); YU, Xiaoqin, Suzhou Jiangsu 215326 (CN)
(74) Representative: Betten & Resch
(86) International application number: PCT/CN2015/076806
(87) International publication number: WO 2016/090803

(56) References cited:
- CN-A- 101 722 699
- CN-A- 102 627 013
- CN-A- 102 627 013
- US-A- 5 854 304
- US-A1- 2008 103 232
- US-A1- 2008 103 232

## Description

### TECHNICAL FIELD

This invention is related to the technical field of multilayer film, especially related to a degradable foamed and co-extruded PA barrier film.

### BACKGROUND OF INVENTION

Multilayer co-extruded film is the film made with several types of polymers by methods of co-extrusion blowing, casting or orientation. As plastic packaging material, this kind of film is widely used in food, processed meat, daily necessity, cosmetics, chemical, pesticide and military products etc. It can be used in sealed flexible packaging for gas puffing, vacuum and thermoforming etc. as well as providing barrier function such as moisture, oxygen, oil and aroma barrier etc. in various circumstances.

Along with the wide use of multilayer film in large quantity in various fields, pollution to the environment caused by multilayer film is becoming serious. Since it is difficult to degrade, with its growing consumption, pollution caused by multilayer film has become worldwide public hazard. Currently, traditional methods for multilayer film waste disposal such as incineration, landfill and recycle etc. are all with disadvantages and have limitations which brings heavy burden to the environment, therefore development of biodegradable multilayer film which is able to reduce pollution to the environment is an important way to solve the pollution problem.

According to the research of the applicant, the existing achievement right now is blank for biodegradation technology and its related application technology for multilayer film with uniform degrading speed for each layer. No related reporting has been found yet both domestic and abroad. However, considering the rapid increase of market demand and protection of ecological balance, research for biodegradable multilayer co-extruded film is pressing, among which, in the biodegrading process, how to achieve approximate uniform degrading speed for materials of each layer in the multilayer co-extruded film without loss of mechanical performance and shelf life of the film is an important research topic with practical significance. CN 102 627 013 A discloses a co-extruded composite film and a method for controlling the synchronous degradation of each layer of said film.

US 2008/103232 A1 discloses a biodegradable additive for polymeric material comprising chemo attractant compound; glutaric acid or its derivatives; carboxylic acid compound; polymer; and swelling agent.

### DISCLOSURE OF THE INVENTION

The purpose of this invention is to provide a degradable foamed and co-extruded PA barrier film with approximate uniform biodegrading speed of each layer.

To achieve above aim, the technical solution applied in this invention is: a degradable foamed and co-extruded PA barrier film with structure as follows:

PA/PO-TIE/EPO/PO-TIE/PA Structure (1)

in Structure (1), explicated from left to right:
PA represents the outer layer functioning as protection or displaying layer, whose material is polyamide containing hydrophilic group of amide group;
PO-TIE represents the 1st bonding layer, whose material is maleic anhydride grafted polyolefine copolymer containing hydrophilic group of acid anhydride;
EPO represents the middle layer functioning as toughening layer, whose material is polypropylene or
polyethylene, which does not contain hydrophilic groups;
PO-TIE represents the 2nd bonding layer, whose material is maleic anhydride grafted polyolefine copolymer containing hydrophilic group of acid anhydride;
PA represents the inner layer functioning as coating layer, whose material is polyamide containing hydrophilic group of amide group;
Wherein: the materials in each layers of the multilayer film gain proximate uniform biodegradability through the introduction of biological carrier, the biological carrier is an addible masterbatch with biodegradability in landfill or composting condition, the materials of each layer are added pro rata with the masterbatch and melt co-extruded to be multilayer film;
the addible masterbatch is composed of carrier and activator, the activator is polymer containing hydrophilic group which is the effective component, the hydrophilic group is at least one of carboxylate, carboxyl, hydroxyl, aldehyde, amide, acid anhydride and ester group;
for Structure (1), in the materials of each layer and the addible masterbatch, the ranking of hydrophility of the hydrophilic group from high to low is carboxylate, carboxyl, hydroxyl, aldehyde, amide, acid anhydride and ester group;
the carrier is selected according to the like dissolves like principle:
   for the polyamide material of outer layer, the carrier of the addible masterbatch is polyamide;
   for maleic anhydride grafted polyolefine copolymer in 1st bonding layer and 2nd bonding layer, when the middle layer is polyethylene, the 1st bonding layer and 2nd bonding layer selects maleic anhydride grafted polyethylene copolymer and the carrier of the addible masterbatch is polyethylene; when the middle layer is polypropylene, the 1st bonding layer and 2nd bonding layer selects maleic anhydride grafted polypropylene copolymer and the carrier of the addible masterbatch is polypropylene or polyethylene;
   for the middle layer, when the middle layer is polyethylene, the carrier of the addible masterbatch is polyethylene; when the middle layer is polypropylene, the carrier of the addible masterbatch is polypropylene or polyethylene;
   for the polyamide material of the inner layer, the carrier of the addible masterbatch is polyamide;
   the additive weight of the masterbatch to the materials of each layer is controlled within 0.3-15% of the total weight of each layer; the hydrophility of the hydrophilic group in the addible masterbatch should be higher than or equal to the hydrophility of hydrophilic group in materials of each layer in Structure (1), through addition of the addible masterbatch, the molar ratio of hydrophilic group vs. carbon atom in materials of each layer in Structure (1) is approaching uniform, namely biological activity of materials of each layer is approaching uniform, so the degrading speed of materials of each layer is approaching uniform.

The above described technical solution is explained as follows:
1. In above described technical solution, the density of polyamide is 1.120-1.140 g/cm³, and the polyamide is PA6 homopolymer or PA6, 66 copolymer or amorphous polyamide.
2. In above described technical solution, the maleic anhydride grafted polyolefine copolymer is applied for the 1st bonding layer. When the middle layer is polyethylene, the maleic anhydride grafted polyethylene copolymer is selected for the 1st bonding layer and the density of maleic anhydride grafted polyethylene copolymer is 0.910-0.950g/cm³, and the maleic anhydride grafting ratio in weight percentage is 0.3%-10%; when the middle layer is polypropylene, the maleic anhydride grafted polypropylene copolymer is selected for the 1st bonding layer and the density of maleic anhydride grafted polypropylene copolymer is 0.880-0.910g/cm³, and the maleic anhydride grafting ratio in weight percentage is 0.3%-10%.
3. In above described technical solution, the middle layer is made from the raw material of polyethylene or polypropylene by the extrusion foaming of at least one of physical foaming and chemical foaming, and the density of foamed polyethylene is 0.600-0.850g/cm³, and the density of foamed polypropylene is 0.600-0.850g/cm³.
4. In above described technical solution, the maleic anhydride grafted polyolefine copolymer is applied for the 2nd bonding layer. When the middle layer is polyethylene, the maleic anhydride grafted polyethylene copolymer is selected for the 2nd bonding layer and the density is 0.910-0.950g/cm3, and the maleic anhydride grafting ratio in mass percentage is 0.3%-10%; when the middle layer is polypropylene, the maleic anhydride grafted polypropylene copolymer is selected for the 2nd bonding layer and the density is 0.880-0.910g/cm3, and the maleic anhydride grafting ratio in mass percentage is 0.3%-10%.
5. In above described technical solution, the polyamide is applied for the inner layer and the density of polyamide is 1.12-1.14 g/cm³, and the polyamide is PA6 homopolymer or PA6, 66 copolymer or amorphous polyamide.
6. In above described technical solution, the outer layer functions as the protection or displaying layer. When it functions as the protection layer, it plays the function of abrasion resistance and temperature resistance; when it functions as the display layer, it could be used to print and display the relevant information or transparently display the packaging content.
7. In above described technical solution, the multilayer film can be obtain the corresponding additional function by coating, metal evaporation and compounding.

Technical theory of this invention is: Materials composing multilayer film could be divided into two types which are hydrophilic material and hydrophobic material, among which hydrophilic material contains hydrophilic group and is biodegradable in landfill or composting condition; while hydrophobic material contains no hydrophilic group, its biodegradability is gained through addition of hydrophilic group. The masterbatch is added pro rata to the materials of each layer, the carrier and activator fully dissolve with each other trough blending, and then the multilayer film is made through melt co-extrusion process. With the effect of high temperature and shear force, macromolecular chains are stably bound to each other through due to the force of hydrogen bond as well as curving and intertwine with each other to form the macromolecular aggregates, thereafter hydrophilic group of the activator is added and dispersed evenly into materials in each layer; in the biodegradable circumstances, the degradable activator is decomposed by microbes first, which causes break of its molecular chain, and the molecular chain of the carrier which is bound to the degradable activator via hydrogen bond breaks as well, which leads to the decomposition of the macromolecular aggregates, so that the purpose of biodegradation of plastic multilayer film is achieved.

The biodegradation process of this invention starts from special swelling. Carbon containing polymer is easier to be intruded by microbial bacterial because of the existence of bioactive compounds in plastics. Acidic substance is produced after bioactive compounds are devoured by the microbial bacteria, which causes the swelling of carbon containing polymer substrate. The molecular structure of carbon containing polymer will expand when the swelling is exposed to heat and moisture. When space is created in molecular structure of the polymer, the combination of bioactive compounds and masterbatch will attract microbiota which can metabolize and neutralize polymers. The microbiota will secrete acid liquid to break the long molecular chain of the polymers until the polymers are decomposed into inert humus, carbon dioxide and methane. This biodegradation process can be conducted in aerobic or anaerobic condition; and in condition with or without the light, heat and humidity. The key part of the technical solution of this invention is: The hydrophility of the hydrophilic group in the addible masterbatch should be higher than or equal to the hydrophility of hydrophilic group in materials of each layer in the multilayer film; through addition of the addible masterbatch, the molar ratio of hydrophilic group vs. carbon atom in materials of each layer in the multilayer film is approaching uniform, namely biological activity of materials of each layer is approaching uniform, so the degrading speed of materials of each layer is approaching uniform. When adding the biological carrier, addibal masterbatch with higher hydrophility than that of materials in the multilayer film is selected to be added to materials of each layer in the multilayer film to weaken the hydrophility of materials in the multilayer film. Through addition of the addible masterbatch, the molar ratio of hydrophilic group vs. carbon atom in materials of each layer in the multilayer film is approaching uniform, namely biological activity of materials of each layer is approaching uniform, so the degrading speed of materials of each layer in the multilayer film is approaching uniform.

The contribution of this invention is: for materials of each layer, approximate uniform biological activity are achieved by balancing the molar ratio of hydrophilic group vs. carbon atom of materials of each layer, so that approximate uniform degrading speed of materials of each layer of the multilayer film is achieved. When the additive volume in mass percentage is within 0.3 -15% of the total mass of the layer, the product appearance, function, physical and mechanism performance will be retained before composted.

### SPECIFIC EMBODIMENT

With reference to the embodiments, the present invention will be described in detail:

### Embodiment:

A degradable foamed and co-extruded PA barrier film with structure as follows:
PA/PO-TIE/EPO/PO-TIE/PA Structure (1)
In Structure (1), explicated from left to right:
PA represents the outer layer functioning as protection or displaying layer. Its material is polyamide PA6 whose monomer molecular formula is -[NH-(CH₂)₅-CO]ₙ- and the hydrophilic group contained in polyamide is amide group-CONH₂-;
PO-TIE represents the 1st bonding layer. Its material is maleic anhydride grafted polyethylene copolymer PE-TIE, which is formed by blending 95% polyethylene and 5% maleic anhydride in mass percentage. Its monomer molecular formula is -[CH₂-CH₂]ₙ-[C₄H₂O₃]ₘ, and the hydrophilic group contained in the maleic anhydride grafted polyethylene copolymer is acid anhydride -OC-O-CO-;
EPO represents the middle layer functioning as toughening layer. Its material is polyethylene PE, and
its monomer molecular formula is -[CH₂-CH₂]ₙ-, and it does not contain hydrophilic groups;
PO-TIE represents the 2nd bonding layer. Its material is maleic anhydride grafted polyethylene copolymer PE-TIE, which is formed by blending 95% polyethylene and 5% maleic anhydride in mass percentage. Its monomer molecular formula is -[CH₂-CH₂]ₙ-[C₄H₂O₃]ₘ, and the hydrophilic group contained in the maleic anhydride grafted polyethylene copolymer is acid anhydride -OC-O-CO-;
PA represents the inner layer functioning as coating layer. Its material is polyamide PA6 whose monomer molecular formula is -[NH-(CH₂)₅-CO]ₙ- and the hydrophilic group contained in polyamide PA6 is amide group-CONH₂-;

That is, the specific formula of the structure (1) is PA6 / PE-TIE / PE / PE-TIE / PA6.

The materials in different layers of the multilayer film gain proximate uniform biodegradability through the introduction of biological carrier. The biological carrier is an addible masterbatch with biodegradability in landfill or composting condition. The materials of each layer are added pro rata with the masterbatch and melt co-extruded to be multilayer film.

The addible masterbatch is composed of carrier and activator. The activator is polymer containing hydrophilic group which is the effective component. The hydrophilic group is at least one of the carboxylate-COO⁻, carboxyl-COOH, hydroxyl-OH, aldehyde-CHO, amide-CONH₂, acid anhydride -OC-O-CO-and ester group-COOR.

For Structure (1), in the materials of each layer and the addible masterbatch, the ranking of hydrophility of the hydrophilic group from high to low is carboxylate-COO⁻, carboxyl-COOH, hydroxyl-OH, aldehyde-CHO, amide-CONH₂, acid anhydride-OC-O-CO- and ester group-COOR.

The carrier is selected according to the like dissolves like principle:
For the polyamide material PA6 of outer layer, the carrier of the addible masterbatch is PA6;
For maleic anhydride grafted polyolefine copolymer of 1st bonding layer and 2nd bonding layer, when the middle layer is polyethylene, the 1st bonding layer and 2nd bonding layer selects the maleic anhydride grafted polyethylene copolymer and the carrier of the addible masterbatch is polyethylene; For the middle layer, when the middle layer is polyethylene, the carrier of the addible masterbatch is polyethylene;
For the polyamide material PA 6 of inner layer, the carrier of the addible masterbatch is PA6;
For the outer layer, the density of polyamide is 1.120-1.140 g/cm³, and the polyamide is PA6 homopolymer.

The maleic anhydride grafted polyolefine copolymer is applied for the 1st bonding layer. In this embodiment, the middle layer is polyethylene, and the maleic anhydride grafted polyethylene copolymer is selected for the 1st bonding layer, and the density of the maleic anhydride grafted polyethylene copolymer is 0.910g/cm³. In practical application, if the maleic anhydride grafted polyethylene copolymer with density of 0.950g/cm³, 0.925g/cm³ or other values within 0.910-0.950g/cm³, the same effect could be reached; in this embodiment, the maleic anhydride grafting ratio in mass percentage is 5%. In practical application, if the maleic anhydride grafting ratio in mass percentage is 0.3%, 8%, 10% or other values within 0.3-10%, same effect could be reached; in practical application, when the middle layer is polypropylene, the maleic anhydride grafted polypropylene copolymer is applied for the 1st bonding layer and the density of maleic anhydride grafted polypropylene copolymer is 0.880-0.910 g/cm³ and the maleic anhydride grafting ratio in mass percentage is 0.3%-10%.

The middle layer is made from the raw material of polyethylene or polypropylene and in this embodiment, the middle layer is polyethylene by the extrusion foaming of at least one of physical foaming and chemical foaming, and the density of foamed polyethylene is 0.600-0.850g/cm³.

2. The maleic anhydride grafted polyolefine copolymer is applied for the 2nd bonding layer. In this embodiment, the middle layer is polyethylene, the maleic anhydride grafted polyethylene copolymer is selected for the 2nd bonding layer and the density of maleic anhydride grafted polyethylene copolymer is 0.910-0.950g/cm3, and the maleic anhydride grafting ratio in mass percentage is 0.3%-10%; the polyamide is applied for the inner layer and the density of polyamide is 1.12-1.14 g/cm³, and the polyamide is PA6 homopolymer.

The additive volume of the masterbatch to the materials of each layer is controlled within 0.3-15% of the total mass of each layer; the hydrophility of the hydrophilic group in the addible masterbatch should be higher than or equal to the hydrophility of hydrophilic group in materials of each layer in Structure (1). Through addition of the addible masterbatch, the molar ratio of hydrophilic group vs. carbon atom in materials of each layer in Structure (1) is approaching uniform, namely biological activity of materials of each layer is approaching uniform, so the degrading speed of materials of each layer is approaching uniform.

For materials of each layer in the multilayer film in embodiment, the ranking of hydrophility of the hydrophilic group from high to low is amide group>acid anhydride, namely for Structure (1), the ranking of hydrophility of materials of each layer from high to low is polyamide PA6> PE-TIE (95%PE+5% maleic anhydride) > polyethylene PE.
To weaken the hydrophility of the hydrophilic group in the multilayer film, sodium alginate whose hydrophility is higher than that in polyamide PA6 (amide group) in the multilayer film is selected to be the activator added.
1. Known that the monomer molecular formula of sodium alginate is (C₅H₇O₄COONa)ₙ. According to this molecular formula, the hydrophilic group in sodium alginate is carboxylic acid sodium (-COONa), hydroxyl (-OH) and ester group (-COOR), among which, hydrophility of carboxylic acid sodium (-COONa) and hydroxyl (-OH) is higher than that of amide group (CONH₂), so sodium alginate polymer is selected as activator to be added to materials of each layer.
2. As hydrophility of carboxylic acid sodium and hydroxyl in sodium alginate is higher than that of amide group in polyamide whose hydrophility is the highest in the multilayer film, sodium alginate leads the function in the biodegradation process, while the function of hydrophility of amide group in polyamide in the multilayer film is weakened. To simplify the statement, assume molar ratio of hydrophilic group vs. carbon atom is 0 in PA6 in following calculation.
3. Calculation of molar ratio of hydrophilic group vs. carbon atom in sodium alginate is 2/3.
4. Molar ratio of hydrophilic group vs. carbon atom in PA6, PE-TIE and PE is 0.
5. As additive volume of addible masterbatch is small, and the carrier of addible masterbatch is the same as or similar to the polymer to which the masterbatch is added, to simplify the statement, the mass of addible masterbatch carrier is neglected in following calculation.

Following taking 1%, 0.3% sodium alginate additive volume in molar quantity as fiducial value to calculate sodium alginate additive volume in mass percentage in each layer of the multilayer film respectively:

### A. 1% sodium alginate additive volume in molar quantity

Assuming materials of each layer in Structure (1) are blended with sodium alginate in the molar ratio of 99:1, calculate the molar ratio of hydrophilic group vs. carbon atom in each layer:
99/100*polyamide PA6_{(n hydrophilic group:n carbon atom)}+1/100*sodium alginate _{(n hydrophilic group:n carbon atom)}= 99/100*0+1/100*2/3=0.0067;
99/100* maleic anhydride grafted polyethylene copolymer _{(n hydrophilic group:n carbon atom)}+1/100*sodium alginate_{(n hydrophilic group:n carbon atom)}= 99/100*0+1/100*2/3=0.0067;
99/100*polyethylene_{(n hydrophilic group:n carbon atom)}+1/100*sodium alginate _{(n hydrophilic group:n carbon atom)}= 99/100*0+1/100*2/3=0.0067.

According to above calculation: after materials of each layer in Structure PA6/PE-TIE/PE/PE-TIE/PA6 are blended with sodium alginate in the molar ratio of 99:1, the molar ratio of hydrophilic group vs. carbon atom in each layer is the same, namely hydrophility of materials of each layer is approaching uniform, the degrading speed of materials of each layer is approaching uniform. The calculation of sodium alginate additive volume in mass is as follows:
Assuming molar quantity of PA6 blended with sodium alginate is 1, mass of PA6 is m₁₋₁, mass of sodium alginate is m₂₋₁;
m₁₋₁=molar mass of PA6 (g/mol) *molar quantity percentage of PA6 (%)*molar quantity (mol) =113.16*99%*1=112.03g;
m₂₋₁=molar mass of sodium alginate (g/mol) *molar quantity percentage of sodium alginate (%)*molar quantity (mol)
   =198.12*1%*1=1.98g;
Assuming molar quantity of PE-TIE blended with sodium alginate is 1, mass of PE-TIE is m₁₋₂, mass of sodium alginate is m₂₋₂;
m₁₋₂=molar mass of PE-TIE (g/mol) *molar quantity percentage of PE-TIE (%)*molar quantity (mol) =32.67*99%*1=32.34g;
m₂₋₂=molar mass of sodium alginate (g/mol) *molar quantity percentage of sodium alginate (%)*molar quantity (mol)
   =198.12*1%*1=1.98g;
Assuming molar quantity of PE blended with sodium alginate is 1, mass of PE is m₁₋₃, mass of sodium alginate is m₂₋₃;
m₁₋₃=molar mass of PE (g/mol) *molar quantity percentage of PE (%)*molar quantity (mol) =28.05*99%*1=27.77g;
m₂₋₃=molar mass of sodium alginate (g/mol) *molar quantity percentage of sodium alginate (%)*molar quantity (mol)
   =198.12*1%*1=1.98g;
Take the outer layer PA6 for example, mass percentage of sodium alginate added to the PA6 layer is: 1.98/(112.03+1.98)*100%=1.74%; mass percentage of sodium alginate added to the other layers is calculated in the same way;
PA6/PE-TIE/PE/PE-TIE/PA6 from left to right, the mass percentage of sodium alginate added to each layer is:
   1.74/5.77/6.66/5.77/1.74.

### B. 0.3% sodium alginate additive volume in molar quantity

Assuming materials of each layer in Structure (1) are blended with sodium alginate in the molar ratio of 99.7:0.3, calculate the molar ratio of hydrophilic group vs. carbon atom in each layer:
99.7/100*polyamide PA6(n_{hydrophilic group}:n _{carbon atom})+0.3/100*sodium alginate(n _{hydrophilic group}:n _{carbon atom})=99.7/100*0+0.3/100*2/3=0.0020;
99.7/100* maleic anhydride grafted polyethylene copolymer(n _{hydrophilic group}:n _{carbon atom}) +0.3/100*sodium alginate(n _{hydrophilic group}:n _{carbon atom})=99.7/100*0+0.3/100*2/3=0.0020;
99.7/100*polyethylene(n _{hydrophilic group}:n _{carbon atom})+0.3/100*sodium alginate(n _{hydrophilic group} :n _{carbon atom}) =99.7/100*0+0.3/100*2/3=0.0020.

According to above calculation: after materials of each layer in Structure PA6/PE-TIE/PE/PE-TIE/PA6 are blended with sodium alginate in the molar ratio of 99.7:0.3, the molar ratio of hydrophilic group vs. carbon atom in each layer is the same, namely hydrophility of materials of each layer is approaching uniform, the degrading speed of materials of each layer is approaching uniform. The calculation of sodium alginate additive volume in mass is as follows: The calculation of sodium alginate additive volume in mass is as follows:
Assuming molar quantity of PA6 blended with sodium alginate is 1, mass of PA6 is m₁₋₁, mass of sodium alginate is m₂₋₁;
m1-1=molar mass of PA6 (g/mol) *molar quantity percentage of PA6 (%)*molar quantity (mol)
   =113.16 *99.7%*1=112.82g;
m₂₋₁=molar mass of sodium alginate (g/mol) *molar quantity percentage of sodium alginate (%)*molar quantity (mol)
   =198.12*0.3%*1=0.59g;
Assuming molar quantity of PE-TIE blended with sodium alginate is 1, mass of PE-TIE is m₁₋₂, mass of sodium alginate is m₂₋₂;
m₁₋₂=molar mass of PE-TIE (g/mol) *molar quantity percentage of PE-TIE (%)*molar quantity (mol)
   =32.67*99.7%*1=32.57g;
m₂₋₂=molar mass of sodium alginate (g/mol) *molar quantity percentage of sodium alginate (%)*molar quantity (mol)
   =198.12*0.3%*1=0.59g;
Assuming molar quantity of PE blended with sodium alginate is 1, mass of PE is m₁₋₃, mass of sodium alginate is m₂₋₃;
m₁₋₃=molar mass of PE (g/mol) *molar quantity percentage of PE (%)*molar quantity (mol) =28.05*99.7%*1=27.97g;
m₂₋₃=molar mass of sodium alginate (g/mol) *molar quantity percentage of sodium alginate (%)*molar quantity (mol)
   =198.12*0.3%*1=0.59g;
Take the outer layer PA6 for example, mass percentage of sodium alginate added to the PA6 layer is: 0.59/(112.82+0.59)*100%=0.52%; mass percentage of sodium alginate added to the other layers is calculated in the same way;
   PA6/PE-TIE/PE/PE-TIE/PA6 from left to right, the mass percentage of sodium alginate added to each layer is:
   0.52/1.78/2.07/1.78/0.52.

When sodium alginate additive volume in mass percentage is within 0.3 -15% of the total mass of the layer, mechanism and barrier performance of the layer to which sodium alginate is added will not be affected.

To weaken the hydrophility of the hydrophilic group in the multilayer film, polylactic acid whose hydrophility is higher than that in polyamide PA6 (amide group) in the multilayer film is selected to be the activator added.
1. Known that the monomer molecular formula of polylactic acid is [OCH(CH3)CO]n-OH. According to this molecular formula, the hydrophilic group in polylactic acid is carboxyl (-COOH), hydroxyl (-OH) and ester group (-COOR), among which, hydrophility of carboxyl (-COOH) and hydroxyl (-OH) is higher than that of amide group (-CONH₂-), so polylactic acid polymer is selected as activator to be added to materials of each layer.
2. As hydrophility of carboxyl and hydroxyl in polylactic acid is higher than that of amide group in polyamide whose hydrophility is the highest in the multilayer film, sodium alginate leads the function in the biodegradation process, while the function of hydrophility of amide group in polyamide in the multilayer film is weakened. To simplify the statement, assume molar ratio of hydrophilic group vs. carbon atom is 0 in PA6 in following calculation.
3. Calculation of molar ratio of hydrophilic group vs. carbon atom in polylactic acid is 2/3.
4. Molar ratio of hydrophilic group vs. carbon atom in PA6, PE-TIE and PE is 0.
5. As additive volume of addible masterbatch is small, and the carrier of addible masterbatch is the same as or similar to the polymer to which the masterbatch is added, to simplify the statement, the mass of addible masterbatch carrier is neglected in following calculation.

Following taking 2%, 0.6% polylactic acid additive volume in molar quantity as fiducial value to calculate polylactic acid additive volume in mass percentage in each layer of the multilayer film respectively:

### A. 2% polylactic acid additive volume in molar quantity

Assuming materials of each layer in Structure (1) are blended with polylactic acid in the molar ratio of 98:2, calculate the molar ratio of hydrophilic group vs. carbon atom in each layer:
98/100*polyamide PA6(n _{hydrophilic group}:n _{carbon atom} )+2/100*polylactic acid(n _{hydrophilic group}:n _{carbon atom} ) =98/100*0+2/100*2/3=0.0133;
98/100* maleic anhydride grafted polyethylene copolymer(n _{hydrophilic group}:n _{carbon atom})
+2/100*polylactic acid (n _{hydrophilic group}:n _{carbon atom})=98/100*0+2/100*2/3=0.0133;
98/100*polyethylene(n _{hydrophilic group}:n _{carbon atom})+2/100*polylactic acid(n _{hydrophilic group}:n _{carbon atom} ) = 98/100*0+2/100*2/3=0.0133;

According to above calculation: after materials of each layer in Structure PA6/PE-TIE/PE/PE-TIE/PA6 are blended with polylactic acid in the molar ratio of 98:2, the molar ratio of hydrophilic group vs. carbon atom in each layer is the same, namely hydrophility of materials of each layer is approaching uniform, the degrading speed of materials of each layer is approaching uniform. The calculation of polylactic acid additive volume in mass is as follows:
Assuming molar quantity of PA6 blended with polylactic acid is 1, mass of PA6 is m₁₋₁, mass of polylactic acid is m₂₋₁;
m₁₋₁=molar mass of PA6 (g/mol) *molar quantity percentage of PA6 (%)*molar quantity (mol)
   =113.16*98%*1=110.90g;
m₂₋₁=molar mass of polylactic acid (g/mol) *molar quantity percentage of polylactic acid (%)*molar quantity (mol)
   =162.14*2%*1=3.24g;
Assuming molar quantity of PE-TIE blended with polylactic acid is 1, mass of PE-TIE is m₁₋₂, mass of polylactic acid is m₂₋₂;
m₁₋₂=molar mass of PE-TIE (g/mol) *molar quantity percentage of PE-TIE (%)*molar quantity (mol)
   =32.67*98%*1=32.02g;
m₂₋₂=molar mass of polylactic acid (g/mol) *molar quantity percentage of polylactic acid (%)*molar quantity (mol)
   =162.14*2%*1=3.24g;
Assuming molar quantity of PE blended with polylactic acid is 1, mass of PE is m₁₋₃, mass of polylactic acid is m₂₋₃;
m₁₋₃=molar mass of PE (g/mol) *molar quantity percentage of PE (%)*molar quantity (mol)
   =28.05*98%*1=27.49g;
m₂₋₃=molar mass of polylactic acid (g/mol) *molar quantity percentage of polylactic acid (%)*molar quantity (mol)
   =162.14*2%*1=3.24g;
Take the outer layer PA6 for example, mass percentage of polylactic acid added to the PA6 layer is: 3.24/(110.90+3.24)*100%=2.84%; mass percentage of sodium alginate added to the other layers is calculated in the same way;
PA6/PE-TIE/PE/PE-TIE/PA6 from left to right, the mass percentage of polylactic acid added to each layer is:
   2.84/9.19/10.54/9.19/2.84.

### B. 0.6% polylactic acid additive volume in molar quantity

Assuming materials of each layer in Structure (1) are blended with polylactic acid in the molar ratio of 99.4:0.6, calculate the molar ratio of hydrophilic group vs. carbon atom in each layer:
99.4/100*polyamide PA6(n _{hydrophilic group}:n _{carbon atom})+0.6/100*polylactic acid(n _{hydrophilic group}:n _{carbon atom})=99.4/100*0+0.6/100*2/3=0.0040;
99.4/100* maleic anhydride grafted polyethylene copolymer (n _{hydrophilic group}:n _{carbon atom}) +0.6/100*polylactic acid (n _{hydrophilic group}:n _{carbon atom})=99.4/100*0+0.6/100*2/3=0.0040;
99.4/100*polyethylene(n _{hydrophilic group}:n _{carbon atom})+0.6/100*polylactic acid(n _{hydrophilic group}:n _{carbon atom} ) = 99.4/100*0+0.6/100*2/3=0.0040;

According to above calculation: after materials of each layer in Structure PA6/PE-TIE/PE/PE-TIE/PA6 are blended with polylactic acid in the molar ratio of 99.4:0.6, the molar ratio of hydrophilic group vs. carbon atom in each layer is the same, namely hydrophility of materials of each layer is approaching uniform, the degrading speed of materials of each layer is approaching uniform. The calculation of polylactic acid additive volume in mass is as follows:
Assuming molar quantity of PA6 blended with polylactic acid is 1, mass of PA6 is m₁₋₁, mass of polylactic acid is m₂₋₁;
m₁₋₁=molar mass of PA6 (g/mol) *molar quantity percentage of PA6 (%)*molar quantity (mol) =113.16*99.4%*1=112.48g;
m₂₋₁=molar mass of polylactic acid (g/mol) *molar quantity percentage of polylactic acid (%)*molar quantity (mol)
   =162.14*0.6%*1=0.97g;
Assuming molar quantity of PE-TIE blended with polylactic acid is 1, mass of PE-TIE is m₁₋₂, mass of polylactic acid is m₂₋₂;
m₁₋₂=molar mass of PE-TIE (g/mol) *molar quantity percentage of PE-TIE (%)*molar quantity (mol) =32.67*99.4%*1=32.47g;
m₂₋₂=molar mass of polylactic acid (g/mol) *molar quantity percentage of polylactic acid (%)*molar quantity (mol)
   =162.14*0.6%*1=0.97g;
Assuming molar quantity of PE blended with polylactic acid is 1, mass of PE is m₁₋₃, mass of polylactic acid is m₂₋₃;
m₁₋₃=molar mass of PE (g/mol) *molar quantity percentage of PE (%)*molar quantity (mol)
   =28.05*99.4%*1=27.88g;
m₂₋₃=molar mass of polylactic acid (g/mol) *molar quantity percentage of polylactic acid (%)*molar quantity (mol)
   =162.14*0.6%*1=0.97g;
Take the outer layer PA6 for example, mass percentage of polylactic acid added to the PA6 layer is: 0.97/(112.48+0.97)*100%=0.86%; mass percentage of sodium alginate added to the other layers is calculated in the same way;
PA6/PE-TIE/PE/PE-TIE/PA6 from left to right, the mass percentage of polylactic acid added to each layer is:
   0.86/2.90/3.36/2.90/0.86.

When polylactic acid additive volume in mass percentage is within 0.3 -15% of the total mass of the layer, mechanism and barrier performance of the layer to which sodium alginate is added will not be affected.

To improve the processing adaptability and dispersibility of the hydrophilic group, polymers of excellent compatibility could be selected for copolymerization. For example, copolymer obtained from copolymerization of polycaprolactone (PCL) and sodium alginate.

Known that the molecular formula of sodium alginate monomer is (C₅H₇O₄COONa)ₙ. The molecular formula of polycaprolactone monomer is [CH2-(CH2)4-COO]ₘ. The monomer molecular formula of sodium alginate grafted polycaprolactone copolymer whose grafting ratio is 50-80% in mass percentage is [CH2-(CH2)4-COO]ₘ(C₅H₇O₄COONa)ₙ. According to this molecular formula, the hydrophilic group in sodium alginate is carboxylic acid sodium (-COONa), hydroxyl (-OH) and ester group (-COOR), the hydrophilic group in polycaprolactone is ester group (-COOR). The hydrophility of carboxylic acid sodium (-COONa) and hydroxyl (-OH) is higher than that of amide group (-CONH₂-). In this embodiment, sodium alginate grafted polycaprolactone copolymer whose sodium alginate grafting ratio in mass percentage is 60% is selected and added to each layer of the multilayer material as activator.
2. As hydrophility of carboxylic acid sodium in copolymer is higher than that of amide group in polyamide whose hydrophility is the highest in the multilayer film, sodium alginate leads the function in the biodegradation process, while the function of hydrophility of amide group in polyamide in the multilayer film is weakened. To simplify the statement, assume molar ratio of hydrophilic group vs. carbon atom is 0 in PA6 in following calculation.
3. In sodium alginate grafted polycaprolactone copolymer, molar ratio of hydrophilic group vs. carbon atom in sodium alginate is 2/3; molar ratio of hydrophilic group vs. carbon atom in polycaprolactone is 1/7, so molar ratio of hydrophilic group vs. carbon atom in sodium alginate grafted polycaprolactone copolymer = 2/3*60%+1/7*40%=0.4571.
4. Molar ratio of hydrophilic group vs. carbon atom in PA6, PE-TIE and PE is 0.
5. As additive volume of addible masterbatch is small, and the carrier of addible masterbatch is the same as or similar to the polymer to which the masterbatch is added, to simplify the statement, the mass of addible masterbatch carrier is neglected in following calculation.

Following taking 2% sodium alginate grafted polycaprolactone copolymer additive volume in molar quantity as fiducial value to calculate sodium alginate grafted polycaprolactone copolymer additive volume in mass percentage in each layer of the multilayer film respectively:
Assuming materials of each layer in Structure (1) are blended with sodium alginate grafted polycaprolactone copolymer in the molar ratio of 98:2, calculate the molar ratio of hydrophilic group vs. carbon atom in each layer after sodium alginate grafted polycaprolactone copolymer is added:
98/100*polyamide PA6_{(n hydrophilic group:n carbon atom)} +2/100*sodium alginate grafted polycaprolactone copolymer _{(n hydrophilic group:n carbon atom)}= 98/100*0+2/100*45.71/100=0.0091;
98/100* maleic anhydride grafted polyethylene copolymer _{(n hydrophilic group:n carbon atom)} +2/100*sodium alginate grafted polycaprolactone copolymer _{(n hydrophilic group:n carbon atom)} = 98/100*0+2/100*45.71/100=0.0091;
98/100*polyethylene _{(n hydrophilic group:n carbon atom)}+2/100*sodium alginate grafted polycaprolactone copolymer _{(n hydrophilic group:n carbon atom)}= 98/100*0+2/100*45.71/100=0.0091;
According to above calculation: after materials of each layer in Structure PA6/PE-TIE/PE/PE-TIE/PA6 are blended with sodium alginate grafted polycaprolactone copolymer in the molar ratio of 98:2, the molar ratio of hydrophilic group vs. carbon atom in each layer is the same, namely hydrophility of materials of each layer is approaching uniform, the degrading speed of materials of each layer is approaching uniform. The calculation of sodium alginate grafted polycaprolactone copolymer additive volume in mass is as follows:
Assuming molar quantity of PA6 blended with sodium alginate grafted polycaprolactone copolymer is 1, mass of PA6 is m₁₋₁, mass of sodium alginate grafted polycaprolactone copolymer is m₂₋₁;
m₁₋₁=molar mass of PA6 (g/mol) *molar quantity percentage of PA6 (%)*molar quantity (mol) =113.16*98%*1=110.90g;
m₂₋₁=molar mass of sodium alginate grafted polycaprolactone copolymer (g/mol) *molar quantity percentage of sodium alginate grafted polycaprolactone copolymer (%)*molar quantity (mol) =164.52*2%*1=3.29g;
Assuming molar quantity of PE-TIE blended with sodium alginate grafted polycaprolactone copolymer is 1, mass of PE-TIE is m₁₋₂, mass of sodium alginate grafted polycaprolactone copolymer is m₂₋₂; m₁₋₂=molar mass of PE-TIE (g/mol) *molar quantity percentage of PE-TIE (%)*molar quantity (mol) =32.67*98%*1=32.02g;
m₂₋₂=molar mass of sodium alginate grafted polycaprolactone copolymer (g/mol) *molar quantity percentage of sodium alginate grafted polycaprolactone copolymer (%)*molar quantity (mol) =164.52*2%*1=3.29g;
Assuming molar quantity of PE blended with sodium alginate grafted polycaprolactone copolymer is 1, mass of PE is m₁₋₃, mass of sodium alginate grafted polycaprolactone copolymer is m₂₋₃; m₁₋₃=molar mass of PE (g/mol) *molar quantity percentage of PE (%)*molar quantity (mol) =28.05*98%*1=27.49g;
m₂₋₃=molar mass of sodium alginate grafted polycaprolactone copolymer (g/mol) *molar quantity percentage of sodium alginate grafted polycaprolactone copolymer (%)*molar quantity (mol) =164.52*2%*1=3.29g;

Take the outer layer PA6 for example, mass percentage of sodium alginate grafted polycaprolactone copolymer added to the PA6 layer is: 3.29/(110.90+3.29)*100%=2.88%; mass percentage of sodium alginate grafted polycaprolactone copolymer added to the other layers is calculated in the same way; PA6/PE-TIE/PE/PE-TIE/PA6 from left to right, the mass percentage of sodium alginate grafted polycaprolactone copolymer added to each layer is:
2.88/9.32/10.69/9.32/2.88.

When sodium alginate grafted polycaprolactone copolymer additive volume in mass percentage is within 0.3 -15% of the total mass of the layer, mechanism and barrier performance of the layer to which sodium alginate is added will not be affected.

In above embodiment, sodium alginate, polylactic acid and sodium alginate grafted copolymer are selected as activator, which is supported by above embodiment directly. However, in this invention, besides above mentioned activators, other polymer containing hydrophilic groups of carboxylate, carboxyl, hydroxyl, aldehyde, amide, acid anhydride and ester group could be selecte, such as polycaprolactone, polycaprolactone polyol, polysaccharide polymers, algae based polymer etc. Enlightened by the embodiment of the invention, technicians in this field can understand and foresee the specific polymer containing these groups, therefore addible masterbatch stated in this invention is not limited to polymers disclosed in the embodiment.

In above embodiment, only several examples in numerical value are given for the additive volume of the addible masterbatch. Enlightened by the examples, it is easy for technicians in this field to think of all additive volume of addible masterbatch within 0.3-15% can achieve the aim and effect of this invention.

In above embodiment, for easier implementation (suitable for melt extrusion), limitation is set for density, copolymerization ratio, blending ratio and foaming ratio of materials of each layer, and illustrated in examples. However, these requirements are not compulsory for this invention so cannot be regarded as basis limiting the protection scope of this invention, in other words, all parameter setting suitable for melt extrusion out of above limitation can execute this invention and reach the corresponding technical effects.

In this invention, though the structure formula of the multilayer film is given, material in the same layer of the formula can be composed of one or several layers of the same material, for example, in the structure formula PA6/PE-TIE/PE/PE-TIE/PA6, apparently the formula is a 5-layer structure, but material in any layer can be composed with two or more layers of the same material, e.g. PE can be composed of two layers so the multilayer film will be composed of 6 layers accordingly, and so on.

It should be noted that the above described embodiments are only for illustration of technical concept and characteristics of present invention with purpose of making those skilled in the art understand the present invention, and thus these embodiments shall not limit the protection range of present invention. Those skilled in the art will be able to achieve the same effect by taking any combination within the range of the numerical ranges on the basis of the above-described embodiments, and values of material density, maleic anhydride grafting ratio and the material percentage in mass are not illustrated exhaustively.

## Claims

1. A degradable foamed and co-extruded PA barrier film with structure as follows:
PA/PO-TIE/EPO/PO-TIE/PA Structure (1)
in Structure (1), explicated from left to right:
PA represents the outer layer functioning as protection or displaying layer, whose material is polyamide containing hydrophilic group of amide group;
PO-TIE represents the 1st bonding layer, whose material is maleic anhydride grafted polyolefine copolymer containing hydrophilic group of acid anhydride;
EPO represents the middle layer functioning as toughening layer, whose material is polypropylene or polyethylene, which does not contain hydrophilic groups;
PO-TIE represents the 2nd bonding layer, whose material is maleic anhydride grafted polyolefine copolymer containing hydrophilic group of acid anhydride;
PA represents the inner layer functioning as coating layer, whose material is polyamide containing hydrophilic group of amide group;
Wherein: the materials in each layers of the multilayer film gain proximate uniform biodegradability through the introduction of biological carrier, the biological carrier is an addible masterbatch with biodegradability in landfill or composting condition, the materials of each layer are added pro rata with the masterbatch and melt co-extruded to be multilayer film;
the addible masterbatch is composed of carrier and activator, the activator is polymer containing hydrophilic group which is the effective component, the hydrophilic group is at least one of carboxylate, carboxyl, hydroxyl, aldehyde, amide, acid anhydride and ester group;
for Structure (1), in the materials of each layer and the addible masterbatch, the ranking of hydrophility of the hydrophilic group from high to low is carboxylate, carboxyl, hydroxyl, aldehyde, amide, acid anhydride and ester group;
the carrier is selected according to the like dissolves like principle:
for the polyamide material of outer layer, the carrier of the addible masterbatch is polyamide;
for maleic anhydride grafted polyolefine copolymer in 1st bonding layer and 2nd bonding layer, when the middle layer is polyethylene, the 1st bonding layer and 2nd bonding layer selects maleic anhydride grafted polyethylene copolymer and the carrier of the addible masterbatch is polyethylene; when the middle layer is polypropylene, the 1st bonding layer and 2nd bonding layer selects maleic anhydride grafted polypropylene copolymer and the carrier of the addible masterbatch is polypropylene or polyethylene;
for the middle layer, when the middle layer is polyethylene, the carrier of the addible masterbatch is polyethylene; when the middle layer is polypropylene, the carrier of the addible masterbatch is polypropylene or polyethylene;
for the polyamide material of the inner layer, the carrier of the addible masterbatch is polyamide;
the additive weight of the masterbatch to the materials of each layer is controlled within 0.3-15% of the total weight of each layer; the hydrophility of the hydrophilic group in the addible masterbatch should be higher than or equal to the hydrophility of hydrophilic group in materials of each layer in Structure (1), through addition of the addible masterbatch, the molar ratio of hydrophilic group vs. carbon atom in materials of each layer in Structure (1) is approaching uniform, namely biological activity of materials of each layer is approaching uniform, so the degrading speed of materials of each layer is approaching uniform.

2. The degradable foamed and co-extruded barrier film as in Claim 1, wherein: in the outer layer, the density of polyamide is 1.120-1.140 g/cm³, and the polyamide is PA6 homopolymer or PA6, 66 copolymer or amorphous polyamide.

3. The degradable foamed and co-extruded barrier film as in Claim 1, wherein: the maleic anhydride grafted polyolefine copolymer is applied for the 1st bonding layer, when the middle layer is polyethylene, the maleic anhydride grafted polyethylene copolymer is selected for the 1st bonding layer and the density of maleic anhydride grafted polyethylene copolymer is 0.910-0.950g/cm³, and the maleic anhydride grafting ratio in weight percentage is 0.3%-10%; when the middle layer is polypropylene, the maleic anhydride grafted polypropylene copolymer is selected for the 1st bonding layer and the density of maleic anhydride grafted polypropylene copolymer is 0.880-0.910g/cm³, and the maleic anhydride grafting ratio in weight percentage is 0.3%-10%.

4. The degradable foamed and co-extruded barrier film as in Claim 1, wherein: the middle layer is made from the raw material of polyethylene or polypropylene by the extrusion foaming of at least one of physical foaming and chemical foaming, and the density of foamed polyethylene is 0.600-0.850g/cm³, and the density of foamed polypropylene is 0.600-0.850g/cm³.

5. The degradable foamed and co-extruded barrier film as in Claim 1, wherein: the maleic anhydride grafted polyolefine copolymer is applied for the 2nd bonding layer, when the middle layer is polyethylene, the maleic anhydride grafted polyethylene copolymer is selected for the 2nd bonding layer and the density is 0.910-0.950g/cm³, and the maleic anhydride grafting ratio in mass percentage is 0.3%-10%; when the middle layer is polypropylene, the maleic anhydride grafted polypropylene copolymer is selected for the 2nd bonding layer and the density is 0.880-0.910g/cm³, and the maleic anhydride grafting ratio in mass percentage is 0.3%-10%.

6. The degradable foamed and co-extruded barrier film as in Claim 1, wherein: the polyamide is applied for the inner layer and the density of polyamide is1.12-1.14 g/cm³, and the polyamide is PA6 homopolymer or PA6, 66 copolymer or amorphous polyamide.

## Patentansprüche

1. Abbaubare geschäumte und coextrudierte PA-Barrierefolie mit folgender Struktur:
PA/PO-TIE/EPO/PO-TIE/PA Struktur (1)
wobei in Struktur (1), von links nach rechts erläutert,
PA die äußere Schicht darstellt, die als Schutz- oder Anzeigeschicht fungiert, deren Material Polyamid, enthaltend eine hydrophile Gruppe einer Amidgruppe, ist;
PO-TIE die erste Bindungsschicht darstellt, deren Material Maleinsäureanhydrid-gepfropftes Polyolefincopolymer, enthaltend eine hydrophile Gruppe eines Säureanhydrids, ist;
EPO die mittlere Schicht darstellt, die als Schlagfestigkeitsschicht fungiert, deren Material Polypropylen oder Polyethylen, das keine hydrophilen Gruppen enthält, ist;
PO-TIE die zweite Bindungsschicht darstellt, deren Material Maleinsäureanhydrid-gepfropftes Polyolefincopolymer, enthaltend eine hydrophile Gruppe eines Säureanhydrids, ist;
PA die innere Schicht darstellt, die als Überzugsschicht fungiert, deren Material Polyamid, enthaltend eine hydrophile Gruppe einer Amidgruppe, ist;
wobei: die Materialien in jeder Schicht der Mehrschichtfolie durch die Einbringung eines biologischen Trägers eine annähernd einheitliche biologische Abbaubarkeit erhalten, der biologische Träger ein zugebbarer Masterbatch mit einer biologischen Abbaubarkeit unter Abfalldeponie- oder Kompostierbedingungen ist, die Materialien jeder Schicht anteilsmäßig zu dem Masterbatch zugegeben sind und schmelzcoextrudiert sind, um eine Mehrschichtfolie zu ergeben;
der zugebbare Masterbatch aus Träger und Aktivator besteht, der Aktivator ein Polymer, enthaltend eine hydrophile Gruppe, ist, das die wirksame Komponente darstellt, wobei die hydrophile Gruppe wenigstens eine ist aus einer Carboxylat-, Carboxyl-, Hydroxyl-, Aldehyd-, Amid-, Säureanhydrid- und Estergruppe;
für Struktur (1), in den Materialien jeder Schicht und dem zugebbaren Masterbatch, die Rangfolge der Hydrophilie der hydrophilen Gruppe von hoch nach niedrig Carboxylat-, Carboxyl-, Hydroxyl-, Aldehyd-, Amid-, Säureanhydrid- und Estergruppe ist;
der Träger gemäß dem "Gleiches löst sich in Gleichem"-Prinzip ausgewählt ist:
für das Polyamidmaterial der äußeren Schicht, der Träger des zugebbaren Masterbatch Polyamid ist;
für das Maleinsäureanhydrid-gepfropfte Polyolefincopolymer in der ersten Bindungsschicht und der zweiten Bindungsschicht, wenn die mittlere Schicht Polyethylen ist, die erste Bindungsschicht und die zweite Bindungsschicht Maleinsäureanhydrid-gepfropftes Polyethylencopolymer sind und der Träger des zugebbaren Masterbatch Polyethylen ist; wenn die mittlere Schicht aus Polypropylen ist, die erste Bindungsschicht und die zweite Bindungsschicht Maleinsäureanhydrid-gepfropftes Polypropylencopolymer sind und der Träger des zugebbaren Masterbatch Polypropylen oder Polyethylen ist;
für die mittlere Schicht, wenn die mittlere Schicht Polyethylen ist, der Träger des zugebbaren Masterbatch Polyethylen ist; wenn die mittlere Schicht Polypropylen ist, der Träger des zugebbaren Masterbatch Polypropylen oder Polyethylen ist;
für das Polyamidmaterial der inneren Schicht, der Träger des zugebbaren Masterbatch Polyamid ist;
das Zugabegewicht des Masterbatch zu den Materialien jeder Schicht innerhalb von 0,3-15 % des Gesamtgewichts jeder Schicht eingestellt ist; die Hydrophilie der hydrophilen Gruppe in dem zugebbaren Masterbatch höher als oder gleich wie die Hydrophilie der hydrophilen Gruppe in den Materialien jeder Schicht in Struktur (1) sein sollte, wobei durch Zugabe des zugebbaren Masterbatch, das Molverhältnis von hydrophiler Gruppe zu Kohlenstoffatom in den Materialien jeder Schicht in Struktur (1) annähernd einheitlich ist, wobei nämlich die biologische Aktivität der Materialien jeder Schicht annähernd einheitlich ist, so dass die Abbaugeschwindigkeit der Materialien jeder Schicht annähernd einheitlich ist.

2. Abbaubare geschäumte und coextrudierte PA-Barrierefolie nach Anspruch 1, wobei: in der äußeren Schicht, die Dichte des Polyamids 1120-1140 g/cm³ beträgt und das Polyamid ein PA6-Homopolymer oder PA6,66-Copolymer oder amorphes Polyamid ist.

3. Abbaubare geschäumte und coextrudierte PA-Barrierefolie nach Anspruch 1, wobei: das Maleinsäureanhydrid-gepfropfte Polyolefincopolymer für die erste Bindungsschicht verwendet ist, wobei wenn die mittlere Schicht Polyethylen ist, das Maleinsäureanhydrid-gepfropfte Polyethylencopolymer für die erste Bindungsschicht ausgewählt ist und die Dichte des Maleinsäureanhydrid-gepfropften Polyethylencopolymers 0,910-0,950 g/cm³ beträgt, und das Maleinsäureanhydridpfropfverhältnis in Gewichtsprozent 0,3 %-10 % beträgt; wobei wenn die mittlere Schicht Polypropylen ist, das Maleinsäureanhydrid-gepfropfte Polypropylencopolymer für die erste Bindungsschicht ausgewählt ist und die Dichte des Maleinsäureanhydrid-gepfropften Polypropylencopolymers 0,880-0,910 g/cm³ beträgt, und das Maleinsäureanhydridpfropfverhältnis in Gewichtsprozent 0,3 %-10 % beträgt.

4. Abbaubare geschäumte und coextrudierte PA-Barrierefolie nach Anspruch 1, wobei: die mittlere Schicht aus dem Rohmaterial von Polyethylen oder Polypropylen durch Extrusionsschäumen von wenigstens einem aus physikalischem Schäumen und chemischem Schäumen hergestellt ist, und die Dichte des geschäumten Polyethylen 0,600-0,850 g/cm³ beträgt, und die Dichte des geschäumtem Polypropylen 0,600-0,850 g/cm³ beträgt.

5. Abbaubare geschäumte und coextrudierte PA-Barrierefolie nach Anspruch 1, wobei: das Maleinsäureanhydrid-gepfropfte Polyolefincopolymer für die zweite Bindungsschicht verwendet ist, wobei wenn die mittlere Schicht Polyethylen ist, das Maleinsäureanhydrid-gepfropfte Polyethylencopolymer für die zweite Bindungsschicht ausgewählt ist und die Dichte 0,910-0,950 g/cm³ beträgt, und das Maleinsäureanhydridpfropfverhältnis in Gewichtsprozent 0,3 %-10 % beträgt; wobei wenn die mittlere Schicht Polypropylen ist, das Maleinsäureanhydrid-gepfropfte Polypropylencopolymer für die zweite Bindungsschicht ausgewählt ist und die Dichte 0,880-0,910 g/cm³ beträgt, und das Maleinsäureanhydridpfropfverhältnis in Gewichtsprozent 0,3 %-10 % beträgt.

6. Abbaubare geschäumte und coextrudierte PA-Barrierefolie nach Anspruch 1, wobei: das Polyamid für die innere Schicht verwendet ist und die Dichte des Polyamids 1,12-1,14 g/cm³ beträgt, und das Polyamid ein PA6-Homopolymer oder PA6,66-Copolymer oder amorphes Polyamid ist.

## Revendications

1. Film formant barrière de PA coextrudé et expansé dégradable ayant une structure comme suit :
PA/PO-TIE/EPO/PO-TIE/PA Structure (1)
dans la structure (1), expliquée de gauche à droite :
PA représente la couche extérieure fonctionnant comme une couche de protection ou d'affichage, dont le matériau est un polyamide contenant un groupe hydrophile de groupe amide ;
PO-TIE représente la 1ère couche de liaison, dont le matériau est un copolymère de polyoléfine greffé d'anhydride maléique contenant un groupe hydrophile d'anhydride d'acide ;
EPO représente la couche centrale fonctionnant comme une couche de renforcement, dont le matériau est le polypropylène ou le polyéthylène, qui ne contient pas de groupes hydrophiles ;
PO-TIE représente la 2ème couche de liaison, dont le matériau est un copolymère de polyoléfine greffé d'anhydride maléique contenant un groupe hydrophile d'anhydride d'acide ;
PA représente la couche intérieure fonctionnant comme une couche de revêtement, dont le matériau est un polyamide contenant un groupe hydrophile de groupe amide ;
dans lequel : les matériaux dans chacune des couches du film multicouche acquièrent une biodégradabilité uniforme par l'introduction d'un support biologique, le support biologique est un mélange maître pouvant être ajouté biodégradable dans des conditions de décharge ou de compostage, les matériaux de chaque couche sont ajoutés au prorata avec le mélange maître et coextrudés à l'état fondu pour former un film multicouche ;
le mélange maître pouvant être ajouté est composé d'un support et d'un activateur, l'activateur est un polymère contenant un groupe hydrophile qui est le composant effectif, le groupe hydrophile est au moins l'un parmi les groupes carboxylate, carboxyle, hydroxyle, aldéhyde, amide, anhydride d'acide et ester ;
pour la structure (1), dans les matériaux de chaque couche et le mélange maître pouvant être ajouté, le classement de caractère hydrophile du groupe hydrophile d'élevé à faible est carboxylate, carboxyle, hydroxyle, aldéhyde, amide, anhydride d'acide et ester ;
le support est choisi en fonction du principe selon lequel les semblables se dissolvent entre eux ;
pour le matériau en polyamide de la couche extérieure, le support du mélange maître pouvant être ajouté est le polyamide ;
pour le copolymère de polyoléfine greffé d'anhydride maléique dans la 1ère couche de liaison et la 2ème couche de liaison, quand la couche centrale est en polyéthylène, la 1ère couche de liaison et la 2ème couche de liaison sélectionnent un copolymère de polyéthylène greffé d'anhydride maléique et le support du mélange maître pouvant être ajouté est le polyéthylène ; quand la couche centrale est en polypropylène, la 1ère couche de liaison et la 2ème couche de liaison sélectionnent un copolymère de polypropylène greffé d'anhydride maléique et le support du mélange maître pouvant être ajouté est le polypropylène ou le polyéthylène ;
pour la couche centrale, quand la couche centrale est en polyéthylène, le support du mélange maître pouvant être ajouté est le polyéthylène ; quand la couche centrale est en polypropylène, le support du mélange maître pouvant être ajouté est le polypropylène ou le polyéthylène ;
pour le matériau en polyamide de la couche intérieure, le support du mélange maître pouvant être ajouté est le polyamide ;
le poids ajouté du mélange maître aux matériaux de chaque couche est contrôlé dans les 0,3 à 15 % du poids total de chaque couche ; le caractère hydrophile du groupe hydrophile dans le mélange maître pouvant être ajouté devrait être supérieur ou égal au caractère hydrophile du groupe hydrophile dans les matériaux de chaque couche dans la structure (1), par l'addition du mélange maître pouvant être ajouté, le rapport molaire du groupe hydrophile aux atomes de carbone dans les matériaux de chaque couche dans la structure (1) se rapproche de l'uniformité, en d'autres termes l'activité biologique des matériaux de chaque couche se rapproche de l'uniformité, si bien que la vitesse de dégradation des matériaux de chaque couche se rapproche de l'uniformité.

2. Film formant barrière coextrudé et expansé dégradable selon la revendication 1, dans lequel : dans la couche extérieure, la masse volumique du polyamide est de 1,120 à 1,140 g/cm³, et le polyamide est un homopolymère de PA6 ou un copolymère de PA6, 66 ou un polyamide amorphe.

3. Film formant barrière coextrudé et expansé dégradable selon la revendication 1, dans lequel : le copolymère de polyoléfine greffé d'anhydride maléique est appliqué pour la 1ère couche de liaison, quand la couche centrale est en polyéthylène, le copolymère de polyéthylène greffé d'anhydride maléique est choisi pour la 1ère couche de liaison et la masse volumique du copolymère de polyéthylène greffé d'anhydride maléique est de 0,910 à 0,950 g/cm³, et le rapport de greffage d'anhydride maléique en pourcentage en poids est de 0,3 % à 10 % ; quand la couche centrale est en polypropylène, le copolymère de polypropylène greffé d'anhydride maléique est choisi pour la 1ère couche de liaison et la masse volumique du copolymère de polypropylène greffé d'anhydride maléique est de 0,880 à 0,910 g/cm³, et le rapport de greffage d'anhydride maléique en pourcentage en poids est de 0,3 % à 10 %.

4. Film formant barrière coextrudé et expansé dégradable selon la revendication 1, dans lequel : la couche centrale est faite à partir de la matière première de polyéthylène ou de polypropylène par expansion par extrusion d'au moins l'une parmi une expansion physique et une expansion chimique, et la masse volumique du polyéthylène expansé est de 0,600 à 0,850 g/cm³, et la masse volumique du polypropylène expansé est de 0,600 à 0,850 g/cm³.

5. Film formant barrière coextrudé et expansé dégradable selon la revendication 1, dans lequel : le copolymère de polyoléfine greffé d'anhydride maléique est appliqué pour la 2ème couche de liaison, quand la couche centrale est en polyéthylène, le copolymère de polyéthylène greffé d'anhydride maléique est choisi pour la 2ème couche de liaison et la masse volumique est de 0,910 à 0,950 g/cm³, et le rapport de greffage d'anhydride maléique en pourcentage en masse est de 0,3 % à 10 % ; quand la couche centrale est en polypropylène, le copolymère de polypropylène greffé d'anhydride maléique est choisi pour la 2ème couche de liaison et la masse volumique est de 0,880 à 0,910 g/cm³, et le rapport de greffage d'anhydride maléique en pourcentage en masse est de 0,3 % à 10 %.

6. Film formant barrière coextrudé et expansé dégradable selon la revendication 1, dans lequel : le polyamide est appliqué pour la couche intérieure et la masse volumique du polyamide est de 1,12 à 1,14 g/cm³, et le polyamide est un homopolymère de PA6 ou un copolymère de PA6, 66 ou un polyamide amorphe.
